# EUROPEAN PATENT APPLICATION

(11) **EP 2 950 428 A1**
(43) Date of publication of application: **02.12.2015**
(21) Application number: 14742953.4
(22) Date of filing: 17.01.2014
(51) Int. Cl.: H02K 7/06, F16H 25/20, F16J 15/18

(54) **ACTUATOR**

(30) Priority: 25.01.2013 JP 2013012627
(71) Applicant: IAI Corporation, Shizuoka 424-0103 (JP)
(72) Inventor: AMANO Katsutoshi, Shizuoka-shi Shizuoka 424-0103 (JP); OTSUKA Yukiharu, Shizuoka-shi Shizuoka 424-0103 (JP)
(74) Representative: Grünecker Patent- und Rechtsanwälte PartG mbB
(86) International application number: PCT/JP2014/050775
(87) International publication number: WO 2014/115648

(57) **Abstract**

The purpose of the present invention is to provide an actuator such that egress of a lubricant to the outside of a housing during forward and rearward movement of a rod is prevented. The actuator comprises: a housing having a rod through-hole; a rod which passes through the rod through-hole such that a portion thereof protrudes to the outside of the housing and is driven forward and rearward; a first rod sealing member which is arranged near the outside of the housing in the rod through-hole; a second rod sealing member arranged near the inside of the housing in the rod through-hole; a lubricant supply part provided in the housing and supplying lubricant to the rod through-hole; and a pressure change absorption groove which is provided between the first rod sealing member and the second rod sealing member in the rod through-hole to communicate with the lubricant supply part, and forms an air layer while absorbing the pressure changes associated with the forward and rearward movement of the rod.

## Description

### TECHNICAL FIELD

The present invention relates to an actuator used for an industrial robot, for example, and more specifically, relates to the actuator which, by providing a pressure change absorption groove which absorbs pressure change associated with forward/rearward movement of a rod, can prevent leaking of lubricant out of a housing during forward/rearward movement of the rod.

### BACKGROUND ART

Patent Document 1 discloses a linear actuator as an example of actuator in the prior art. The linear actuator disclosed in Patent Document 1 has the following structure: First, there is a case, and a motor is incorporated in the case. A hollow rotation shaft rotated by the motor is also incorporated in the case. A nut is fixed inside the hollow rotation shaft, and an output screw is screwed and disposed in the nut.

Accordingly, when the motor rotates, the hollow rotation shaft is rotated, and the rotation of hollow rotation shaft integrally rotates the nut. With the rotation of the nut, the output screw moves both forwardly and rearwardly in the length direction.

Also, openings of the both ends of the case are fixed and closed by respective end plates.

### REFERENCE DOCUMENTS OF CONVENTIONAL ART

### PATENT DOCUMENT(S)

Patent Document 1: Official Gazette, Japanese Patent No. 4918234.

However, the structure of the prior art has the following problems:

First, in the linear actuator described above, the end plates are fixed to the both ends of the case. As a fixing method, for example, using of adhesive can be envisaged, but when the fixing is performed by adhesive, then there is a problem of difficulty in assembly and dismantlement of the actuator.

Moreover, when the fixing is performed by adhesive, the sealing performance is obtained solely by adhesive only, without intervention of any seal member separately. However, it is difficult to obtain a desired sealing performance only by adhesive.

In order to solve the above problems, the applicant has filed a patent application (Japanese Patent Application No. 2012-193195, not published yet).

### SUMMARY OF THE INVENTION

### PROBLEMS TO BE SOLVED BY INVENTION

The structure of the prior art has the following problems:
Namely, in the actuator of Patent Application No. 2012-193195, during movement of a rod, radical pressure change occurs to grease serving as lubricant inside a housing. And because of the radical pressure change, when the rod moves forwardly, too much grease to hold by a rod wiper is transferred forwardly, and the grease leaks out of the housing from a part between the outer peripheral surface of the rod and a rod seal member disposed on the front end side of the housing.
Moreover, during rearward movement of the rod, from a grease nipple and a grease feeding path serving as a lubricant feeding part, excessive grease is fed to the outer peripheral surface of the rod, and part of the grease cannot be held by the rod wiper and leaks out of the housing from the part between outer peripheral surface of the rod and the rod seal member.

In the light of the above problem, it is an object of the present invention to provide an actuator which can prevent leaking of lubricant out of the housing during forward/rearward movement of the rod.

### MEANS TO SOLVE THE PROBLEM

To achieve the objects mentioned above, an actuator according to claim 1 is comprising: a housing provided with a rod through-hole; a rod penetrating through the rod through-hole and projecting partially towards outside the housing and driven in the forward/rearward direction; a first rod seal member provided in the rod through-hole on the side closer to the outside of the housing; a second rod seal member provided in the rod through-hole on the side closer to the inside of the housing; a lubricant feeding part provided in the housing and which feeds lubricant to the rod through-hole; and a pressure change absorption groove, provided between the first rod seal member and the second rod seal member of the rod through-hole in a state of being communicated with the lubricant feeding part, in which an air layer is formed, and which absorbs pressure change associated with forward/rearward movement of the rod.

Moreover, according to the actuator of claim 2, in the actuator as claimed in claim 1, the lubricant feeding part is provided with an orifice, and the pressure change absorption groove is communicated with the orifice.

Moreover, according to the actuator of claim 3, in the actuator as claimed in claim 2, the pressure change absorption groove is provided in a circular shape.

Moreover, according to the actuator of claim 4, in the actuator as claimed in any claim of claims 1 to 3, a rod wiper, through which the rod penetrates and which holds the lubricant, is provided on the side closer to the outside of the housing than the pressure change absorption groove.

Moreover, according to the actuator of claim 5, in the actuator as claimed in any claim of claims 1 to 4, the housing is composed of a housing body provided with a front opening and a rear opening at both ends, a front cover which closes the front opening, and a rear cover which closes the rear opening; a front cover seal member is interposed between the front cover and the housing body; and a rear cover seal member is interposed between the rear cover and the housing body.

Moreover, according to the actuator of claim 6, in the actuator as claimed in claim 5, an actuator body is incorporated inside the housing body; and the actuator body is composed of a motor, a screw rotated by the motor, a nut screwed into the screw, and the rod fixed to the nut.

Moreover, according to the actuator of claim 7, in the actuator as claimed in claim 5 or claim 6, the front cover is composed of a front bracket, and a bearing bracket disposed on the inner side of the front bracket in the axis direction; and a grease reservoir is provided between the front bracket and the bearing bracket.

Moreover, according to the actuator of claim 8, in the actuator as claimed in claim 7, the first rod seal member and the second rod seal member are provided on the side of the front bracket.

Moreover, according to the actuator of claim 9, in the actuator as claimed in any claim of claims 1 to 8, surface hardening treatment is applied to the outer surface of the rod.

Moreover, according to the actuator of claim 10, in the actuator as claimed in claim 9, the surface hardening treatment applied to the rod is hard chrome plating.

Moreover, according to the actuator of claim 11, in the actuator as claimed in any claim of claims 1 to 8, surface hardening treatment is applied at least to the inner surfaces of the first rod seal member and the second rod seal member.

Moreover, according to the actuator of claim 12, in the actuator as claimed in claim 11, the surface hardening treatment applied to the first rod seal member and the second rod seal member is DLC (diamond-like carbon) coating.

Moreover, according to the actuator of claim 13, in the actuator as claimed in any claim of claims 6 to 12, the actuator body is fixed to the housing by screwing screw members from the outside of the housing, and penetrating parts of the screw members through the housing are provided with housing seal members.

### EFFECT OF THE INVENTION

As discussed above, an actuator according to claim 1 is comprising: a housing provided with a rod through-hole; a rod penetrating through the rod through-hole and projecting partially towards outside the housing and driven in the forward/rearward direction; a first rod seal member provided in the rod through-hole on the side closer to the outside of the housing; a second rod seal member provided in the rod through-hole on the side closer to the inside of the housing; a lubricant feeding part provided in the housing and which feeds lubricant to the rod through-hole; and a pressure change absorption groove, provided between the first rod seal member and the second rod seal member of the rod through-hole in a state of being communicated with the lubricant feeding part, in which an air layer is formed, and which absorbs pressure change associated with forward/rearward movement of the rod. Therefore, during forward movement of the rod, the pressure of the lubricant is absorbed by the pressure change absorption groove, and with less volume of lubricant transferred forwardly associated with the movement of the rod, the leaking of lubricant out of the housing is prevented. During rearward movement of the rod, the lubricant is accommodated in the pressure change absorption groove, and an appropriate volume of lubricant is fed to the outer peripheral surface of the rod via the pressure change absorption groove, whereby the leaking of lubricant out of the housing can be prevented.

Moreover, according to the actuator of claim 2, in the actuator as claimed in claim 1, the lubricant feeding part is provided with an orifice, and the pressure change absorption groove is communicated with the orifice. Therefore, the pressure change can be absorbed effectively, and an appropriate volume of lubricant can be fed from the lubricant feeding part via the orifice.

Moreover, according to the actuator of claim 3, in the actuator as claimed in claim 2, the pressure change absorption groove is provided in a circular shape. Therefore, the pressure change can be absorbed more effectively.

Moreover, according to the actuator of claim 4, in the actuator as claimed in any claim of claims 1 to 3, a rod wiper, through which the rod penetrates and which holds the lubricant, is provided on the side closer to the outside of the housing than the pressure change absorption groove. Therefore, with holding of the lubricant by the rod wiper, the leaking of lubricant to the outside can be prevented, and the lubricant can also be fed to the outer peripheral surface of the rod by the rod wiper.

Moreover, according to the actuator of claim 5, in the actuator as claimed in any claim of claims 1 to 4, the housing is composed of a housing body provided with a front opening and a rear opening at both ends, a front cover which closes the front opening, and a rear cover which closes the rear opening; a front cover seal member is interposed between the front cover and the housing body; and a rear cover seal member is interposed between the rear cover and the housing body. Therefore, the assembly and dismantlement of the actuator can be performed easily, and also the dust resistance and water resistance can be improved.

Moreover, according to the actuator of claim 6, in the actuator as claimed in claim 5, an actuator body is incorporated inside the housing body; and the actuator body is composed of a motor, a screw rotated by the motor, a nut screwed into the screw, and the rod fixed to the nut. Therefore, the assembly and dismantlement of the actuator can be performed more easily.

Moreover, according to the actuator of claim 7, in the actuator as claimed in claim 5 or claim 6, the front cover is composed of a front bracket, and a bearing bracket disposed on the inner side of the front bracket in the axis direction; and a grease reservoir is provided between the front bracket and the bearing bracket. Therefore, for example, with grooves formed in the front bracket side and the bearing bracket side, respectively, so that each side faces to the other, the grease reservoir can be formed easily without requiring any complicated working.

Moreover, according to the actuator of claim 8, in the actuator as claimed in claim 7, the first rod seal member and the second rod seal member are provided on the side of the front bracket. Therefore, the rod seal member can be replaced easily by simply detaching the front bracket. Moreover, since the rod seal member is removed by simply detaching the front bracket, the rod axial center adjustment can be performed easily in a state free from sliding friction caused by the rod seal member.

Moreover, according to the actuator of claim 9, in the actuator as claimed in any claim of claims 1 to 8, surface hardening treatment is applied to the outer surface of the rod. Therefore, the smooth movement can be performed by reducing the coefficient of friction between the rod and the rod seal member, and the abrasion resistance can be improved.

Moreover, according to the actuator of claim 10, in the actuator as claimed in claim 9, the surface hardening treatment applied to the rod is hard chrome plating. Therefore, the abrasion resistance can be improved still further.

Moreover, according to the actuator of claim 11, in the actuator as claimed in any claim of claims 1 to 8, surface hardening treatment is applied at least to the inner surfaces of the first rod seal member and the second rod seal member. Therefore, the smooth movement can be performed by reducing the coefficient of friction between the rod and the rod seal member, and the abrasion resistance can be improved.

Moreover, according to the actuator of claim 12, in the actuator as claimed in claim 11, the surface hardening treatment applied to the first rod seal member and the second rod seal member is DLC (diamond-like carbon) coating. Therefore, the abrasion resistance can be improved still further.

Moreover, according to the actuator of claim 13, in the actuator as claimed in any claim of claims 6 to 12, the actuator body is fixed to the housing by screwing screw members from the outside of the housing, and penetrating parts of the screw members through the housing are provided with housing seal members. Therefore, the dust resistance and water resistance can be improved still further.

### BRIEF DESCRIPTION OF DRAWINGS

[Figure 1] A perspective view of an actuator according to a first embodiment of the present invention.
[Figure 2] An exploded perspective view of the actuator according to the first embodiment of the present invention.
[Figure 3] A sectional view as seen from the line III-III of Fig. 1, according to the first embodiment of the present invention.
[Figure 4] An expanded view of the part IV of Fig. 3, according to the first embodiment of the present invention.
[Figure 5] A rear view of a front bracket used for the actuator, according to the first embodiment of the present invention.
[Figure 6] An expanded view of a bearing bracket used for the actuator and an end part of an actuator body according to the first embodiment of the present invention, in a state that a housing body is detached.
[Figure 7] A sectional view as seen from the line VII-VII of Fig. 3, according to the first embodiment of the present invention.
[Figure 8] An expanded sectional view of the end part of the actuator, according to a second embodiment of the present invention.

### MODE(S) FOR CARRYING OUT THE INVENTION

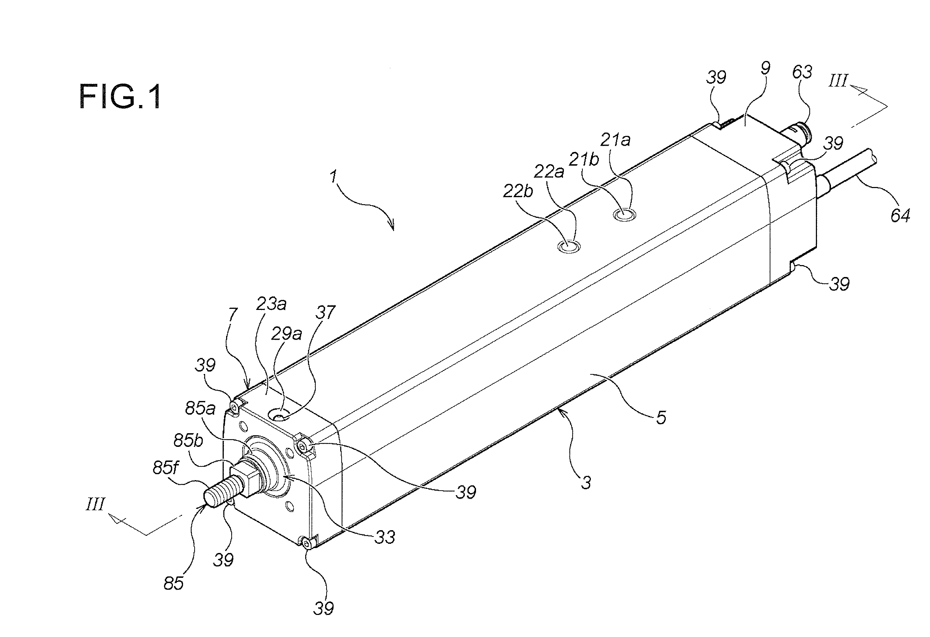

A first embodiment of the present invention will be explained as below, with reference to Fig. 1 to Fig. 7.

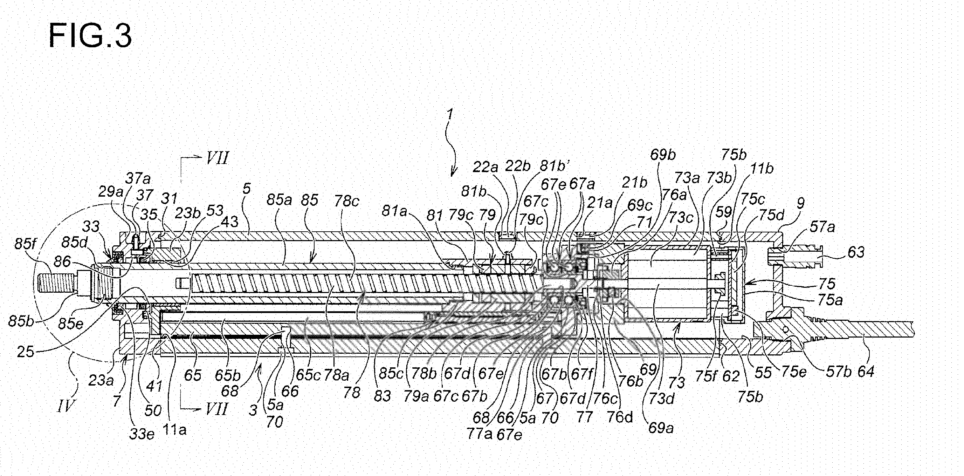

As illustrated in Fig. 1 to Fig. 3, an actuator 1 according to the first embodiment is provided with a housing 3. The housing 3 is composed of a housing body 5, a front cover 7 provided on the front end side (on the left of Fig. 3) of the housing body 5, and a rear cover 9 provided on the rear end side (on the right of Fig. 3).

Moreover, an actuator body 10 is incorporated inside the housing 3 of the actuator 1.

First, the housing body 5 will be explained.

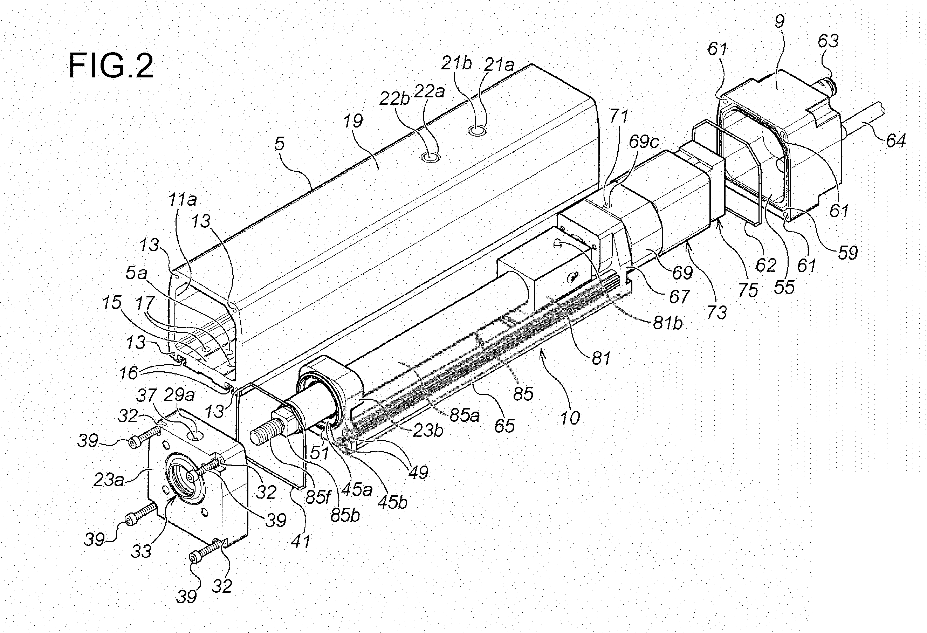

As illustrated in Fig. 2 and Fig. 3, the housing body 5 is a member in a tubular shape, with a front opening 11a formed at the front end (the left end of Fig. 3), and also with a rear opening 11b formed at the rear end (the right end of Fig. 3). Moreover, as illustrated in Fig. 2, female thread parts 13, 13, 13, 13 are formed in the front end surface (the surface on the lower left side of Fig. 2) of the housing body 5, and although not illustrated here, the same female thread parts as those of the female thread parts 13, 13, 13, 13, are also formed in the rear end surface (the surface on the upper right side of Fig. 2) of the housing body 5. Moreover, a plurality of mounting bolt through-holes 17 is perforated in a bottom surface 15 of the housing body 5.

Moreover, as illustrated in Fig. 2, mounting grooves 16, 16 elongating in the length direction (the direction from the lower left to the upper right of Fig. 2), respectively, is formed in the bottom surface 15 of the housing body 5. The actuator 1 is mounted at an arbitrary position by using these mounting grooves 16, 16.

Moreover, as illustrated in Fig. 2 and Fig. 3, a tool through-hole 21a is perforated in an upper surface 19 of the housing body 5. During non-use, the tool through-hole 21a is closed by a seal cap 21b. The seal cap 21b is detachable from the housing body 5, and is detached when an unillustrated jig is inserted in the tool through-hole 21a.

Moreover, a grease feeding through-hole 22a is perforated in the upper surface 19 of the housing body 5. During non-use, the grease feeding through-hole 22a is closed by a seal cap 22b. The seal cap 22b is detachable from the housing body 5, and is detached when grease serving as lubricant is fed from the grease feeding through-hole 22a.

Next, the front cover 7 will be explained.

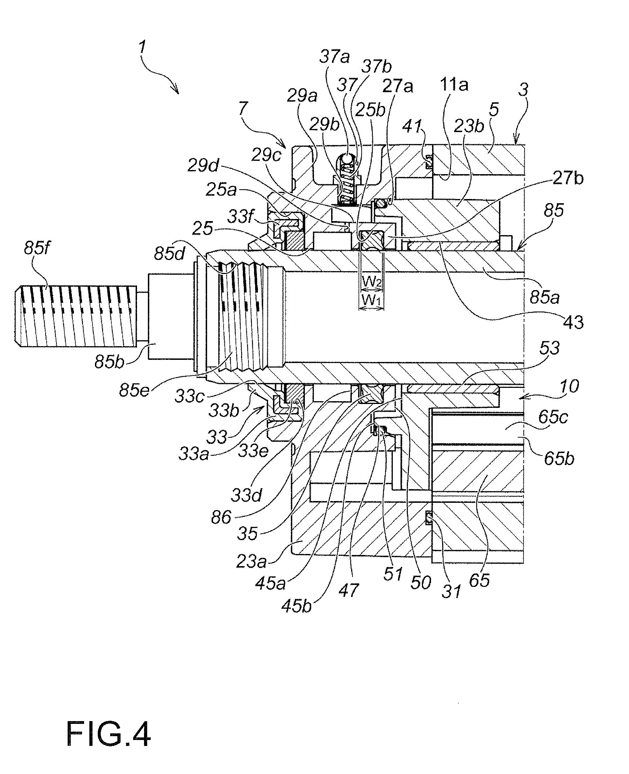

As illustrated in Fig. 3 and Fig. 4, the front cover 7 is composed of a front bracket 23a and a bearing bracket 23b. First, a rod through-hole 25 is formed in the front bracket 23a. A first seal member fitting part 25a is formed on the front end side (on the left of Fig. 4) of the rod through-hole 25, and a second seal member fitting part 25b is formed on the rear end side (on the right of Fig. 4) of the rod through-hole 25. The first seal member fitting part 25a is open to the front side (to the left of Fig. 4), and is also open inwardly in the radial direction. On the other hand, the second seal member fitting part 25b is provided as a circular groove opening inwardly in the radial direction.

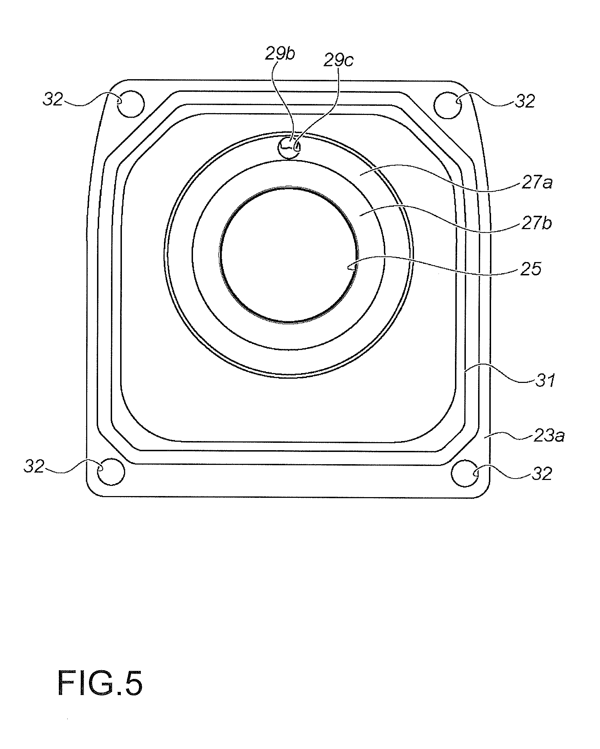

Moreover, as illustrated in Fig. 4 and Fig. 5, a grease reservoir recess 27a is formed in a surface of the front bracket 23a on the side (on the right of Fig. 4) facing to the bearing bracket 23b. The grease reservoir recess 27a is a circular groove provided on the outer peripheral side of the rod through-hole 25. Moreover, as illustrated in Fig. 4, a grease reservoir projection 27b is formed on the inner side of the grease reservoir recess 27a. Moreover, a nipple mounting recess 29a is formed on the side of the upper surface (on the upper side of Fig. 4) of the front bracket 23a, and a nipple mounting through-hole 29b is perforated on the side of the bottom surface thereof. Moreover, the nipple mounting through-hole 29b and the grease reservoir recess 27a communicate with each other via a grease feeding path 29c. Moreover, the grease feeding path 29c and the rod through-hole 25 communicate with each other via a grease feeding path (orifice) 29d.

Moreover, a seal member groove 31 is formed on the end surface of the front bracket 23a on the side facing to the housing body 5. Moreover, as illustrated in Fig. 2 and Fig. 5, bolt through-holes 32, 32, 32, 32 are formed in the front bracket 23a.

A first rod seal member 33 is fitted in the first seal member fitting part 25a of the front bracket 23a. The first rod seal member 33 is made of rubber to which diamond-like carbon coating (hereinafter abbreviated to "DLC coating"), for example, is applied as the surface hardening treatment. Moreover, the first rod seal member 33 is composed of a circular part 33a fitted in the first seal member fitting part 25a, and a dust seal 33b protrusively formed from the front surface side of the circular part 33a. Moreover, a through-hole 33c is formed in the first rod seal member 33, elongating in the forward/rearward direction (the right/left direction of Fig. 4) thereof. Moreover, a rod wiper fitting part 33d is formed on the side of the rear end (on the right of Fig. 4) of the circular part 33a, and a rod wiper 33e is fitted in the rod wiper fitting part 33d. The rod wiper 33e is made of, for example, felt. Moreover, a circular member 33f, for example made of metal, is embedded inside the circular part 33a.

Note that, DLC coating is applied, as the surface hardening treatment of the first rod seal member 33, to the inner surface of the first rod seal member 33, or to the whole part thereof.

Moreover, a second rod seal member 35 is fitted in the second seal member fitting part 25b of the front bracket 23a. The second rod seal member 35 is made of rubber to which DLC coating is applied as the surface hardening treatment. Moreover, as illustrated in Fig. 4, the second rod seal member 35 is a ring-shaped member having a cross-sectional shape in the letter X.

Note that, DLC coating is applied, as the surface hardening treatment of the second rod seal member 35, to the inner surface of the second rod seal member 35, or to the whole part thereof.

Moreover, the width of the second seal member fitting part 25b (the length W1 in the right/left direction of Fig. 4) is somewhat wider than the width of the second rod seal member 35 (the length W2 in the right/left direction of Fig. 4).

Moreover, a grease nipple 37 is press-fitted in the nipple mounting through-hole 29b. A coil spring 37b and a ball 37a are incorporated in the grease nipple 37, and the ball 37a is always biased by the coil spring 37b in the upward direction of Fig. 4, so that the grease nipple 37 is closed. When grease as lubricant is fed, an unillustrated grease gun is connected to the grease nipple 37, and an operating lever is operated. Then, the pressure of the fed grease presses down the ball 37a against the spring force of the coil spring 37b, and the grease is injected from the unillustrated grease gun into the grease feeding path 29c, via the grease nipple 37.

The grease nipple 37, the grease feeding path 29c and the grease feeding path (orifice) 29d constitute a grease feeding part.

Bolts 39, 39, 39, 39 penetrate the front bracket 23a through the bolt through-holes 32, 32, 32, 32 of the front bracket 23a, and screw into the female thread parts 13, 13, 13, 13 in the front end surface (the surface on the lower left side of Fig. 2) of the housing body 5, whereby the front bracket 23a is fixed to the housing body 5.

Moreover, a front cover seal member 41 is fitted in the seal member groove 31 of the front bracket 23a, and the front cover seal member 41 is interposed between the front bracket 23a and the housing body 5.

Note that, the front cover seal member 41 is ring-shaped before mounting, and with fitting in the seal member groove 31, transforms to the shape as illustrated in Fig. 2.

As illustrated in Fig. 4, a through-hole 43 is formed in the bearing bracket 23b, elongating in the forward/rearward direction (the right/left direction of Fig. 4) thereof. The front end side (on the side of the left end of Fig. 4) of the through-hole 43 has a bigger diameter to form a grease reservoir recess 45a, and a grease reservoir projection 45b is formed on the outer peripheral side thereof. Moreover, a stepped part is formed on the outer peripheral surface of the grease reservoir projection 45b, and this stepped part serves as an O-ring engagement part 47. Moreover, as illustrated in Fig. 2, bolt through-holes 49, 49, 49, 49 are formed in the both right and left sides of the lower part of the bearing bracket 23b.

The front bracket 23a and the bearing bracket 23b constitute an integral part, by engagement of the grease reservoir recess 27a of the front bracket 23a with the grease reservoir projection 45b of the bearing bracket 23b. Moreover, with integration of the front bracket 23a and the bearing bracket 23b, a grease reservoir 50 is formed between the grease reservoir projection 27b and the grease reservoir recess 45a.

Moreover, an O-ring 51 is engaged with the O-ring engagement part 47 of the bearing bracket 23b. Moreover, the O-ring 51 is interposed between the inner peripheral surface of the grease reservoir recess 27a of the front bracket 23a and the outer peripheral surface of the grease reservoir projection 45b of the bearing bracket 23b. Moreover, a cylindrical-shaped bearing 53 is incorporated on the side of the rear end (on the right of Fig. 4) of the through-hole 43 of the bearing bracket 23b.

Next, the rear cover 9 will be explained.

As illustrated in Fig. 2 and Fig. 3, a cavity 55, with an opening towards the housing body 5 (to the left of Fig. 3), is formed in the rear cover 9. Moreover, an intake/exhaust port through-hole 57a and a cable through-hole 57b are formed on the side of the rear end (on the right of Fig. 3) of the rear cover 9. Moreover, a seal member groove 59 is formed in the end surface of the rear cover 9 on the side of the housing body 5 (on the left of Fig. 3). Moreover, as illustrated in Fig. 2, bolt through-holes 61, 61, 61, 61 are formed in the rear cover 9.

The bolts 39, 39, 39, 39 penetrate through the bolt through-holes 61, 61, 61, 61 to be screwed into unillustrated female thread parts, respectively, on the rear end surface (the surface on the upper right side of Fig. 2) of the housing body 5, whereby the rear cover 9 is fixed to the housing body 5. Moreover, a rear cover seal member 62 is fitted in the seal member groove 59 of the rear cover 9, and the rear cover seal member 62 is interposed between the rear cover 9 and the housing body 5.

Note that, the rear cover seal member 62 is ring-shaped before mounting, and with fitting in the seal member groove 59, transforms to the shape as illustrated in Fig. 2.

Moreover, an intake/exhaust port 63 is installed with passing through the intake/exhaust port through-hole 57a. Moreover, a cable 64 is installed with passing through the cable through-hole 57b. The cable 64 is a bundle of power lines and signal lines.

Next, the actuator body 10 will be explained.

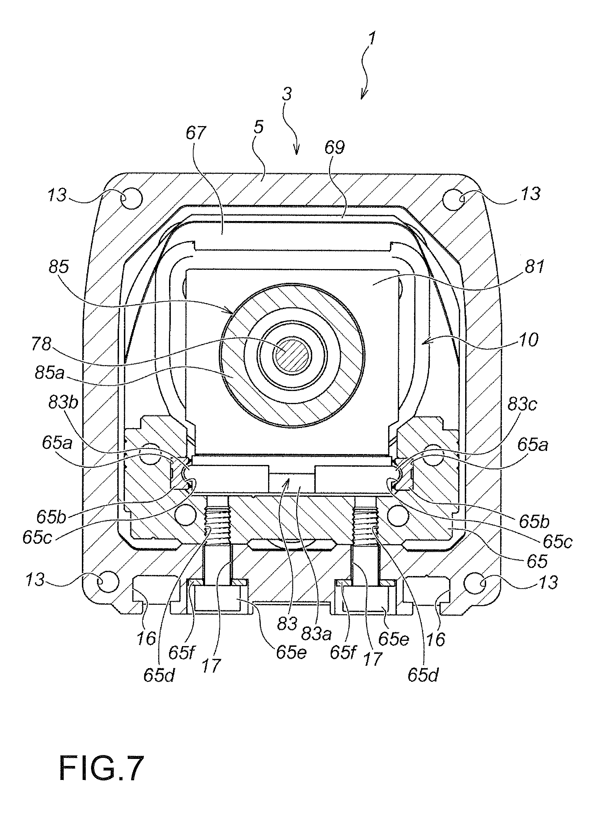

With reference to the actuator body 10, first, there is a base 65, and as illustrated in Fig. 7, the cross section of the base 65 is U-shaped. Moreover, as illustrated in Fig. 7, guide rail grooves 65a, 65a elongating in the length direction (the direction perpendicular to the drawing sheet surface of Fig. 7) are formed, respectively, in the inner surfaces on the both sides of the base 65 in the width direction (the right/left direction of Fig. 7) thereof. Guide rails 65b, 65b are pressed, respectively, into the guide rail grooves 65a, 65a. Guide recesses 65c, 65c elongating in the length direction (the direction perpendicular to the drawing sheet surface of Fig. 7) are formed, respectively, in the guide rails 65b, 65b. Moreover, a plurality of female thread parts 65d is formed in the bottom surface side (the lower side of Fig. 7) of the base 65.

Note that, two of the plurality of female thread parts 65d are illustrated in Fig. 7.

Bolts 65e penetrate through the mounting bolt through-holes 17 of the housing body 5 to be screwed, respectively, into the female thread parts 65d of the base 65, whereby the base 65 and the housing body 5 are fixed to each other. Moreover, washer-shaped housing seal members 65f are interposed, respectively, between the heads of the bolts 65e and the housing body 5.

Note that, as illustrated in Fig. 3, the positioning of the base 65 and the housing body 5 is performed by inserting positioning pins 68, respectively, into positioning holes 66 perforated in the base 65 and into positioning holes 5a perforated in the housing body 5. A lid 70 is attached over the inserted positioning pins 68.

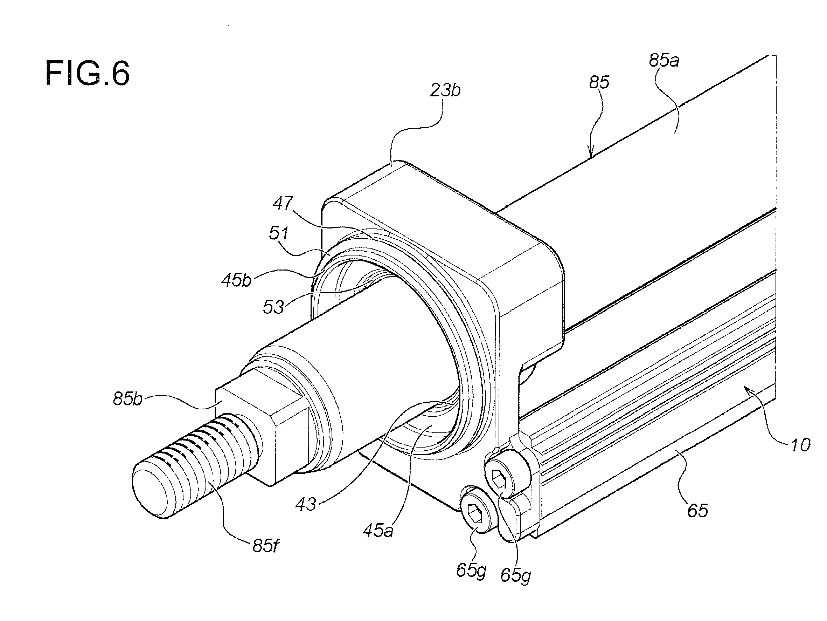

Moreover, as illustrated in Fig. 6, the bearing bracket 23b, which has already been explained, is fixed to the front end surface (the surface on the lower left side of Fig. 6) of the base 65. Four bolts 65g penetrate through the bolt through-holes 49, 49, 49, 49 of the bearing bracket 23b to be screwed, respectively, into unillustrated four female thread parts of the base 65, whereby the base 65 and the bearing bracket 23b are fixed to each other.

Moreover, the diameter of the bolt through-hole 49 of the bearing bracket 23b has some play against the diameter of the bolt 65g. Therefore, the mounting position of the bearing bracket 23b relative to the base 65 can be adjusted within the range of play. Moreover, with adjustment of the mounting position of the bearing bracket 23b relative to the base 65, the axial center of rod 85, which will be described afterwards, can be adjusted.

Moreover, as illustrated in Fig. 3, a bearing housing 67 is provided in the rear end part (the right end of Fig. 3) of the base 65. The bearing housing 67 is a hollow-shaped member having openings on the front end side (on the left of Fig. 3) and the rear end side (on the right of Fig. 3). The bearing housing 67 incorporates ball bearings 67a, 67a. The ball bearing 67a includes, an outer wheel 67b, and an inner wheel 67c incorporated in the inner side of the outer wheel 67b. A retainer 67d having a plurality of through-holes is provided between the outer wheel 67b and the inner wheel 67c, and balls 67e are held in the plurality of through-holes, respectively, of the retainer 67d. With rolling motion of the plurality of balls 67e, the inner wheel 67c rotates relative to the outer wheel 67b.

Moreover, the outer wheel 67b of the ball bearing 67a on the front end side (on the left of Fig. 3) is in contact with the front end side (on the left of Fig. 3) of the inner surface of the bearing housing 67. Moreover, a ball bearing fixing member 67f is provided on the rear end side (on the right of Fig. 3) of the ball bearing 67a on the rear end side (on the right of Fig. 3). The ball bearing fixing member 67f is in contact with the outer wheel 67b of the ball bearing 67a on the rear end side (on the right of Fig. 3). Moreover, unillustrated bolts penetrate through the bearing housing 67 to be screwed, respectively, into unillustrated female thread parts of the base 65, whereby the base 65 and the bearing housing 67 are fixed to each other.

Moreover, the size of the through-hole of the bearing housing 67 has some play against the size of the bolt, whereby the position of the bearing housing 67 relative to the base 65 can be adjusted within the range of play.

Moreover, a motor bracket 69 is provided at the rear (on the right of Fig. 3) of the bearing housing 67. The motor bracket 69 has a through-hole 69a formed therein. Moreover, the front end side (on the left of Fig. 3) of the through-hole 69a has a larger diameter, to form a bearing housing engagement part 69b. With the engagement of the bearing housing engagement part 69b with the rear end side (on the right of Fig. 3) of the bearing housing 67, the bearing housing 67 and the motor bracket 69 constitute an integral part.

Moreover, a set screw female thread part 69c is formed on the side of the front end (on the left of Fig. 3) of the upper part (the upper part of Fig. 3) of the motor bracket 69. A set screw 71 is screwed into the set screw female thread part 69c of the motor bracket 69 so as to depress the upper surface (the upper surface of Fig. 3) on the rear end side (on the right of Fig. 3) of the bearing housing 67, whereby the motor bracket 69 and the bearing housing 67 are fixed to each other. Accordingly, by simply removing the set screw 71 only, the motor bracket 69 is separated from the bearing housing 67.

Note that, the screwing and removal of the set screw 71 into and out of the set screw female thread part 69c is performed by an unillustrated jig inserted from the tool through-hole 21a of the housing body 5.

Moreover, the actuator body 10 has a motor 73. As illustrated in Fig. 3, the motor 73 has a motor case 73a, and stator 73b is fixed on the side of the inner periphery of the motor case 73a. A rotor 73c comprising a permanent magnet is rotatably incorporated on the side of the inner periphery of the stator 73b. An output shaft 73d is fixed at the center of the rotor 73c. The motor 73 is driven by electric power supplied via the cable 64. Thus, when the electric power is supplied via the cable 64, the rotor 73c and the output shaft 73d integrally rotate in the clockwise/counterclockwise direction.

The top end side (the left end side of Fig. 3) of the motor case 73a of the motor 73 is fitted in the rear end side (the right end side of Fig. 3) of the through-hole 69a of the motor bracket 69. Moreover, unillustrated bolts penetrate through unillustrated through-holes provided in the motor bracket 69, to be screwed, respectively, into unillustrated female thread parts provided in the motor case 73a, whereby the motor bracket 69 and the motor 73 are fixed to each other. Moreover, the output shaft 73d of the motor 73 is disposed inside the through-hole 69a of the motor bracket 69.

Moreover, an encoder 75 is provided on the rear end side (on the right of Fig. 3) of the motor 73. The encoder 75 has an encode cover 75a provided on the rear end side (on the right of Fig. 3) of the motor case 73a. Inside the encoder cover 75a, a substrate 75c is installed, via three stick-shaped spacers 75b, on the rear end surface (the surface on the right of Fig. 3) of the motor case 73a. Electronic parts 75d, 75e are mounted on the substrate 75c.

Moreover, a code wheel 75f is fixed to a part of the output shaft 73d of the motor 73 protruding into the inside of the encoder cover 75a. An unillustrated encoder scale is indicated on the rear end surface (the surface on the right of Fig. 3) of the code wheel 75f. With the unillustrated encoder scale, lower intense parts and higher intense parts of the reflected light are provided on the rear end surface (the surface on the right of Fig. 3) of the code wheel 75f. Further, a light source and a sensor, both unillustrated, are mounted on the surface on the reverse side (the surface on the left of Fig. 3) of the substrate 75c, opposite to the surface on which the electronic parts 75d, 75e are mounted. The light from the light source irradiates the unillustrated encoder scale, so that the reflected light is detected by the sensor. Accordingly, the rotation direction and position of the output shaft 73d of the motor 73 are detected.

Note that, as described above, although the motor bracket 69 is separated from the bearing housing 67 by simply removing the set screw 71 only, since the motor 73 and the encoder 75 constitute an integral part of the motor bracket 69, by simply removing the set screw 71 only, it is possible to separate the integral part composed of the motor bracket 69, the motor 73 and the encoder 75, from the actuator body 10.

As illustrated in Fig. 3, a coupling member 76a as a part of an Oldham coupling is fixed, by a set screw 76b, to the front end side (on the left of Fig. 3) of the output shaft 73d of the motor 73. Meanwhile, a coupling member 76c as another part of the Oldham coupling is fixed to a ball screw connecting member 77. Moreover, a coupling member 76d as still another part of the Oldham coupling is interposed and engaged between the coupling member 76a and the coupling member 76c, whereby the output shaft 73d of the motor 73 and the ball screw connecting member 77 are connected to each other. Moreover, the coupling members 76a, 76c and 76d are provided, respectively, inside the through-hole 69a of the motor bracket 69.

Moreover, the ball screw connecting member 77 is pressed into the inner wheels 67c, 67c of the ball bearings 67a, 67a, which are incorporated in the bearing housing 67, respectively.

Further, a connecting hole 77a is formed in the ball screw connecting member 77, and a ball screw 78 is pressed into and fixed to the connecting hole 77a. That is, the ball screw 78 is composed of a screw part 78a, and a connecting part 78b on the rear end side (on the right of Fig. 3), and the connecting part 78b is pressed into the connecting hole 77a of the ball screw connecting member 77. A male screw part 78c is formed in the outer peripheral surface of the screw part 78a of the ball screw 78.

A ball nut 79, provided with an unillustrated female thread part, is screwed into and disposed at the ball screw 78. First, the ball nut 79 has a ball nut body 79a, and end caps 79c, 79c are provided, respectively, on the front and rear ends (both on the right and left ends of Fig. 3) of the ball nut body 79a. An unillustrated no-load circuit is formed in the ball nut body 79a, and unillustrated return paths are formed in the end caps 79c, 79c, respectively. Thus, with the rotation of the ball screw 78, the ball nut 79 makes reciprocating movement, and at that time, between the male screw part 78c of the ball screw 78 and the unillustrated female thread part of the ball nut 79, via the return path of the end cap 79c on one side, the no-load circuit, and the return path of the end cap 79c on the other side, a plurality of unillustrated balls circulates, whereby the smooth reciprocating movement of the ball nut 79 is accomplished.

A rod connecting member 81 is fixed to the ball nut 79. The rod connecting member 81 coaxially incorporates the ball screw 78. Moreover, a female thread part 81a is formed on the side of the front end (on the left of Fig. 3) of the rod connecting member 81.

Moreover, a grease nipple 81b is provided in the upper part (the upper part of Fig. 3) of the rod connecting member 81, penetrating through the rod connecting member 81. The grease nipple 81b communicates with the unillustrated no-load circuit of the ball nut 79.

An unillustrated coil spring and a ball 81b' are incorporated in the grease nipple 81b, and the ball 81b' is always biased by the coil spring in the upward direction of Fig. 3, so that the grease nipple 81b is closed. When grease as lubricant is fed, first, the unillustrated grease gun, which is inserted from the grease feeding through-hole 22a into the housing 3, is connected to the grease nipple 81b, and the operating lever is operated. Then, the pressure of the fed grease presses down the ball 81b' against the spring force of the coil spring, and the injection of the grease begins. The grease is injected into the unillustrated no-load circuit of the ball nut 79, via the grease nipple 81b.

Moreover, a guided part 83 is fixed to the rod connecting member 81. Moreover, as illustrated in Fig. 7, first, the guided part 83 has a guided part body 83a, and unillustrated recesses are formed in the end surfaces on the both sides in the width direction (the both right and left directions of Fig. 7) of the guided part body 83a, respectively, elongating in the forward/rearward direction (the direction perpendicular to the drawing sheet surface of Fig. 7). Moreover, unillustrated no-load circuits are formed inside the unillustrated recesses on the both sides in the width direction (the both right and left directions of Fig. 7) of the guided part body 83a, respectively.

Moreover, end caps 83b, 83b are provided, respectively, at the both ends in the forward/rearward direction (the direction perpendicular to the drawing sheet surface of Fig. 7), on the one end side in the width direction (on the left of Fig. 7) of the guided part body 83a. Also, end caps 83c, 83c are provided, respectively, at the both ends in the forward/rearward direction (the direction perpendicular to the drawing sheet surface of Fig. 7), on the other end side in the width direction (on the right of Fig. 7) of the guided part body 83a. Unillustrated return paths are formed in the end caps 83b, 83b, 83c, 83c, respectively.

Further, unillustrated plurality of balls circulate, in the unillustrated no-load circuit on the one end side in the width direction (on the left of Fig. 7), in the unillustrated return paths of the end caps 83b, 83b, and in the space between the unillustrated recess on the one end side in the width direction (on the left of Fig. 7) and the guide recess 65c of the guide rail 65b on the one end side in the width direction (on the left of Fig. 7). Moreover, the unillustrated plurality of balls also circulate, in the unillustrated no-load circuit on the other end side in the width direction (on the right of Fig. 7), in the unillustrated return paths of the end caps 83c, 83c, and in the space between the unillustrated recess on the other end side in the width direction (on the right of Fig. 7) and the guide recess 65c of the guide rail 65b on the other end side in the width direction (on the right of Fig. 7).

With the guided part 83 as described above, the ball nut 79 is guided smoothly in the forward/rearward direction (the direction perpendicular to the drawing sheet surface of Fig. 7). Moreover, when the ball screw 78 rotates, the rotation of the ball nut 79 is restricted by the base 65 via the guided part 83, whereby the ball nut 79 moves in the both length directions (the right/left directions of Fig. 3) of the ball screw 78.

Moreover, a rod 85 is connected to the rod connecting member 81. The rod 85 is composed of a rod body 85a in the hollow cylindrical shape, and an object mounting member 85b provided on the side of the top of the rod body 85a. A male screw part 85c is formed in the outer peripheral surface on the rear end side (the right end side of Fig. 3) of the rod body 85a. Thus, with the male screw part 85c screwed into the female thread part 81a of the rod connecting member 81, the rod 85 is connected to the rod connecting member 81.

Moreover, a female thread part 85d is formed in the inner peripheral surface on the front end side (the left end side of Fig. 3) of the rod body 85a. On the other hand, a male screw part 85e is formed on the side of the rear end (the right end side of Fig. 3) of the object mounting member 85b. Thus, with the female thread part 85d of the rod body 85a screwed into the male screw part 85e of the object mounting member 85b, the object mounting member 85b is attached to the rod body 85a.

Moreover, hard chrome plating is applied, as surface hardening treatment, to the outer peripheral surface of the rod body 85a

Moreover, the ball screw 78 is coaxially accommodated inside the rod 85.

A male screw part 85f is formed on the side of the top of the object mounting member 85b. With screwing of an unillustrated female thread part of an object into the male screw part 85f, the unillustrated object is mounted to the rod 85.

Moreover, the rod 85 penetrates through the bearing 53 incorporated in the bearing bracket 23a, and through the rod through-hole 25, the second rod seal member 35, the rod wiper 33e and the first rod seal member 33 of the front bracket, and protrudes out of the housing 3. Moreover, the rod 85 is in slidable contact with the inner peripheral surfaces of the first rod seal member 33, the second rod seal member 35, the rod wiper 33e and the bearing 53.

Moreover, as illustrated in Fig. 4, a pressure change absorption groove 86 is formed in the inner peripheral surface of the rod through-hole 25. The pressure change absorption groove 86 is circular-shaped, formed between the first rod seal member 33 and the second rod seal member 35. Moreover, the pressure change absorption groove 86 is provided to be communicating with the grease feeding path (orifice) 29d. The pressure change absorption groove 86 accommodates the grease therein, so as to absorb the pressure change of grease which occurs during forward/rearward movement of the rod 85. Accordingly, the leaking of grease out of the housing 3 via a gap between the first rod seal member 33 and the rod 85 is prevented, and an appropriate volume of grease is fed from the lubricant feeding part to the outer peripheral surface of the rod 85.

Moreover, the whole part inside the pressure change absorption groove 86 is not filled with the grease, and an air layer is formed partially.

Next, functions of the actuator 1 according to the first embodiment will be explained.

First, the operation of the actuator 1 will be explained.

With an operation command transmitted via the unillustrated signal lines of the cable 64, when the motor 73 is driven, the output shaft 73d rotates in the direction/velocity according to the operation command. The rotation of the output shaft 73d is transmitted to the Oldham coupling comprising the coupling members 76a, 76c, 76d, and to the ball screw 78 via the ball screw connecting member 77, whereby the ball screw 78 also rotates in the same direction/velocity as that of the output shaft 73d.

At that time, the ball nut 79 screwed into the ball screw 78 moves in any of the length directions (the right or left direction of Fig. 3) of the ball screw 78. This is because, although the ball nut 79 attempts to rotate, by rotation force of the ball screw 78, in the same direction as the rotation direction of the ball screw 78, since the guided part 83 connected to the ball nut 79 is guided in the length direction (the right/left direction of Fig. 3) by the guide rails 65b, 65b of the base 65, the rotation of the ball nut 79 by the rotation of the ball screw 78 is restricted. Further, with the movement of the ball nut 79, the rod 85, as well as the unillustrated object mounted to the rod 85, also move in the length direction (the right/left direction of Fig. 3) of the ball screw 78.

Next, the path through which the grease is fed during operation of the actuator 1, etc., will be explained. First, the grease reservoir 50 is formed between the front bracket 23a and the bearing bracket 23b. The grease reservoir 50 holds unillustrated grease. The grease passes through the grease feeding paths 29c, 29d, and enters inside the pressure change absorption groove 86, and therefrom, with the movement of the rod 85, is fed between the inner peripheral surface of the rod through-hole 25, on the side closer to the front (on the left of Fig. 4) than the second rod seal member 35, and the outer peripheral surface of the rod 85. Moreover, the grease is directly fed from the grease reservoir 50 to the outer peripheral surface of the rod 85, and therefrom, with the movement of the rod 85, is fed between the inner peripheral surfaces of the rod through-hole 25 as well as of the bearing 53, on the side closer to the rear (on the right of Fig. 4) than the second rod seal member 35, and the outer peripheral surface of the rod 85. With these functions, the rod 85 moves smoothly.

Note that, the outer peripheral surface of the rod 85 and the second rod seal member 35 are in tight contact to each other, and almost no grease can pass through.

Moreover, the grease moves between the rod through-hole 25 and the outer peripheral surface of the rod 85, and is held by the rod wiper 33e. Accordingly, the leaking of grease from the part between the outer peripheral surface of the rod 85 and the first rod seal member 33 is prevented. Moreover, the grease held by the rod wiper 33e is also fed to the outer peripheral surface of the rod 85 appropriately.

Note that, the supplement of the grease into the grease reservoir 50 and the pressure change absorption groove 86 is performed via the grease nipple 37.

Moreover, the grease is also filled in the unillustrated no-load circuit of the ball nut 79. With this grease, the unillustrated plurality of balls roll and move smoothly, in the space between the helicoidally-shaped male screw part 78c of the ball screw 78 and the unillustrated female thread part of the ball nut 79. The supplement of grease into the unillustrated no-load circuit of the ball nut 79 is performed via the grease feeding through-hole 22a of the housing body 5 and the grease nipple 81b of the rod connecting member 81.

Next, the axial center adjustment of the rod 85 will be explained. In the first embodiment, for the purpose of smooth movement of the rod 85, the axial center of the rod 85 is adjusted in the assembly stage.

Namely, as illustrated in Fig. 6, before attachment of the front bracket 23a, the first rod seal member 33, the rod wiper 33e and the second rod seal member 35, and also before fastening of the four bolts 65g, the bearing bracket 23b can be moved freely, with in the range of play of the bolt through-hole 49. Similarly, with regard to the bearing housing 67, before fastening of the unillustrated bolts, it can be moved freely, within the range of play relative to the base 65.

In this state, first, the rod 85 is pushed in towards the right side of Fig. 3, whereby the ball nut 79 and the rod connecting member 81 are moved to the right end of Fig. 3. In this state, an unillustrated bolt is fasten loosely, whereby the bearing housing 67 is mounted to the base 65 temporarily.

Next, the rod 85 is pulled out towards the left side of Fig. 3, whereby the ball nut 79 and the rod connecting member 81 are moved to the left end of Fig. 3. In this state, the four bolts 65g are fastened loosely, whereby the bearing bracket 23b is mounted to the base 65 temporarily.

In this state, with the appropriate movement of the rod 85 in the axis direction to check the smoothness, the mounting positions of the bearing housing 67 and the bearing bracket 23b are determined. Then, with fastening of the unillustrated bolt and the bolts 65g, the bearing housing 67 and the bearing bracket 23b are fixed to a desired position.

Next, functions of sealing structure of the actuator 1 will be explained.

As illustrated in Fig. 4, first, the front cover seal member 41 is interposed between the housing body 5 and the front bracket 23a, and the rear cover seal member 62 is interposed between the housing body 5 and the rear cover 9. With the front cover seal member 41 and the rear cover seal member 62, the intrusion of foreign articles and waterdrop, etc., from the both end surfaces of the housing body 5 into the housing 3 is prevented.

Moreover, as illustrated in Fig. 7, the washer-shaped housing seal members 65f are interposed, respectively, between the heads of the bolts 65e and the housing body 5. With the housing seal members 65f, the intrusion of foreign articles and waterdrop, etc., via the through-holes 17 of the housing body 5 into the housing 3 is prevented.

Moreover, as illustrated in Fig. 4, the first rod seal member 33 and the second rod seal member 35 are provided in the front bracket 23a. With the first rod seal member 33 and the second rod seal member 35, the intrusion of foreign articles and waterdrop, etc., from the part of the housing 3 through which the rod 85 penetrates, into the housing 3, is prevented.

This feature will be explained more in detail. The first rod seal member 33 is provided on the outer side (on the left of Fig. 3) of the rod through-hole 25, and the second rod seal member 35 is provided on the inner side (on the right of Fig. 3) of the rod through-hole 25. Accordingly, even when any foreign articles or waterdrop, etc., intruded from the gap between the first rod seal member 33 and the rod 85, further intrusion of the foreign articles and waterdrop, etc., into the housing 3 is prevented by the second rod seal member 35. Namely, the intrusion of foreign articles and waterdrop, etc., into the housing 3 is prevented in two stages.

Moreover, as illustrated in Fig. 4, the rod wiper 33e is provided on the rear end side (on the right of Fig. 3) of the inner peripheral surface of the first rod seal member 33. Also with the rod wiper 33e, between the first rod seal member 33 and the second rod seal member 35, a desired sealing function is exercised, and the foreign articles and waterdrop, etc., are captured.

Moreover, as illustrated in Fig. 4, the first rod seal member 33 and the second rod seal member 35 prevent leaking of unillustrated grease and wear debris, etc., generated inside the housing 3, from the inside of the housing 3 to the outside thereof. Moreover, the leaking of grease and wear debris, etc., out of the housing 3 is also prevented by the rod wiper 33e.

Moreover, the O-ring 51 is interposed between the inner peripheral surface of the grease reservoir recess 27a of the front bracket 23a and the outer peripheral surface of the grease reservoir projection 45b of the bearing bracket 23b. With the O-ring 51, unillustrated grease in the grease reservoir 50 is prevented from leaking therefrom.

Next, the feeding of grease will be explained in detail.

First, with the attachment of the unillustrated grease gun to the grease nipple 37, the pressure of the fed grease presses down the ball 37a inside the grease nipple 37 against the spring force of the coil spring 37b. Thus the grease is injected into the grease feeding path 29c via the grease nipple 37.

The grease injected into the grease feeding path 29c is further injected into the grease reservoir 50, and also injected, via the grease feeding path (orifice) 29d, into the pressure change absorption groove 86.

Then, as described above, from the grease reservoir 50 and the pressure change absorption groove 86, the grease is fed to the outer peripheral surface of the rod 85.

Moreover, the pressure change absorption groove 86 is not filled with the grease, and the air layer is formed inside the pressure change absorption groove 86.

Next, the path through which the grease is fed, etc., will be explained more in detail.

As illustrated in Fig. 4, when the rod 85 moves forward (to the left of Fig. 4), with the movement of the rod 85, and also with the movement of the second rod seal member 35 to the front side (to the left of Fig. 4) associated with the movement of the rod 85, the grease is biased to the front side (to the left of Fig. 4), and the pressure change of the grease occurs. At that time, a part of the grease which has been moved to the front side enters inside the pressure change absorption groove 86, whereby the pressure change of grease is absorbed. Moreover, the air layer in the pressure change absorption groove 86 is compressed. Therefore, the volume of grease moved from the pressure change absorption groove 86 towards the front side (to the left of Fig. 4) is reduced, to the degree in which the rod wiper 33e can hold the grease. Accordingly, the leaking of grease out of the housing 3 via the gap between the first rod seal member 33 and the rod 85 is prevented.

Moreover, when the rod 85 moves rearward, the second rod seal member 35 is also moved toward the rear side (to the right of Fig. 4), and the width (the length in the right/left direction of Fig. 4) is deformed to be smaller. Accordingly, a gap is generated between the second rod seal member 35 and the front side surface (the surface on the left of Fig. 4) of the second seal member fitting part 25b. Then, the grease enters in the gap. With the movement of grease, the air pressure of the air layer in the pressure change absorption groove 86 reduces, and consequently, the grease is fed from the grease feeding path 29c and the grease reservoir 50, via the grease feeding path (orifice) 29d. Since the grease is accommodated in the pressure change absorption groove 86, no excessive grease is fed to the outer peripheral surface of the rod 85. Moreover, too much volume of grease to be held by the rod wiper 33e is not fed thereto, either.

Moreover, since the inside of the housing 3 is enclosed, there is a concern about inhibition of movement of the ball nut 79 and the rod 85. To cope with this, via the intake/exhaust port 63, the outside air is taken into the housing 3, or the air inside the housing 3 is exhausted to the outside, whereby the inhibition of the movement of the ball nut 79 and the rod 85 is prevented.

Next, effects of the actuator 1 according to the first embodiment will be explained.

First, the pressure change absorption groove 86 is formed in the inner peripheral surface between the first rod seal member 33 and the second rod seal member 35 of the rod through-hole 25. When the rod 85 moves forward, with the movement of the rod 85, and also with the movement of the second rod seal member 35 to the front side (to the left of Fig. 4) associated with the movement of the rod 85, the grease is biased to the front side (to the left of Fig. 4), and the pressure change of the grease occurs. However, the part of the grease which has been moved to the front side enters inside the pressure change absorption groove 86, whereby the pressure change of grease is absorbed. At that time, the air layer in the pressure change absorption groove 86 is compressed. Therefore, the volume of grease moved from the pressure change absorption groove 86 towards the front side (to the left of Fig. 4) is reduced, to the degree in which the rod wiper 33e can hold the grease. Accordingly, the leaking of grease out of the housing 3 via the gap between the first rod seal member 33 and the rod 85 can be prevented.

Moreover, when the rod 85 moves rearward, the second rod seal member 35 is also moved toward the rear side (to the right of Fig. 4), and the width (the length in the right/left direction of Fig. 4, W2) is deformed to be smaller. Accordingly, a gap is generated between the second rod seal member 35 and the front side surface (the surface on the left of Fig. 4) of the second seal member fitting part 25b. Then, the grease enters in the gap. With the movement of grease, the air pressure of the air layer in the pressure change absorption groove 86 reduces, and consequently, the grease is fed from the grease feeding path 29c and the grease reservoir 50, via the grease feeding path (orifice) 29d, and since the grease is accommodated in the pressure change absorption groove 86, no excessive grease is fed to the outer peripheral surface of the rod 85. Moreover, too much volume of grease to be held by the rod wiper 33e is not fed thereto, either. Accordingly, the leaking of grease out of the housing 3 via the gap between the first rod seal member 33 and the rod 85 can be prevented.

Moreover, at the both end surfaces of the housing body 5, the front cover 7 and the rear cover 9 are mounted to be detachable via the bolts 39, not by adhering. Therefore, the assembly and dismantlement of the housing 3 can be performed easily.

Moreover, the front cover seal member 41 is interposed between the housing body 5 and the front bracket 23a, and the rear cover seal member 62 is interposed between the housing body 5 and the rear cover 9. Therefore, the intrusion of foreign articles and waterdrop, etc., from the both end surfaces of the housing body 5 into the housing 3 is surely prevented, and the dust resistance and water resistance of the actuator 1 can be improved.

Moreover, the first rod seal member 33 and the second rod seal member 35 are provided in the front bracket 23a. Therefore, with the first rod seal member 33 and the second rod seal member 35, the intrusion of foreign articles and waterdrop, etc., from the part of housing 3 through which the rod 85 penetrates, into the housing 3, can be prevented.

Moreover, the first rod seal member 33 is provided on the outer side (on the left of Fig. 3) of the rod through-hole 25, and the second rod seal member 35 is also provided on the inner side (on the right of Fig. 3) of the rod through-hole 25. Accordingly, even when any foreign articles or waterdrop, etc., intruded from the gap between the first rod seal member 33 and the rod 85, further intrusion of the foreign articles and waterdrop, etc., into the housing 3 is prevented by the second rod seal member 35. Namely, the intrusion of foreign articles and waterdrop, etc., into the housing 3 can be prevented in two stages.

Moreover, the rod wiper 33e is provided on the rear end side (on the right of Fig. 3) of the inner peripheral surface of the first rod seal member 33. Therefore, with the rod wiper 33e, between the first rod seal member 33 and the second rod seal member 35, the sealing function can be exercised, and the foreign articles and waterdrop, etc., can be captured.

Moreover, the first rod seal member 33 and the second rod seal member 35 can prevent leaking of unillustrated grease and wear debris, etc., generated inside the housing 3, from the inside of the housing 3 to the outside thereof. Moreover, likewise the case of the intrusion of foreign articles and waterdrop, etc., from the outside of the housing 3 as described above, since the two-stage rod seal members are provided by the first rod seal member 33 and the second rod seal member 35, the leaking of grease and wear debris, etc., generated inside the housing 3, can be prevented more securely. Moreover, the leaking of grease and wear debris, etc., generated inside the housing 3, to the outside of the housing 3, can also be prevented by the rod wiper 33e.

As described above, with the first rod seal member 33, the second rod seal member 35 and the rod wiper 33e, the dust resistance and water resistance of the actuator 1 can be improved.

Moreover, since the rod wiper 33e holds the grease, the rod wiper 33e can also feed the grease to the outer peripheral surface of the rod 85.

Moreover, the second rod seal member 35 is the ring-shaped member having the cross-sectional shape in the letter X, and is in contact with the rod 85 at two parts, namely on the front end side (on the left of Fig. 4) and on the rear end side (on the right of Fig. 4). Therefore, the dust resistance and water resistance can be improved. Moreover, since the second rod seal member 35 has a small contact area with the rod 85, the sliding friction can be reduced.

Moreover, the housing seal member 65f are interposed, respectively, between the heads of the bolts 65e and the housing body 5. Therefore, the intrusion of foreign articles and waterdrop, etc., from the through-holes 17 into the housing 3 is surely prevented, and the dust resistance and water resistance of the actuator 1 can be improved.

Moreover, the front cover 7 is composed of the front bracket 23a and the bearing bracket 23b, and the grease reservoir 50 is formed between the front bracket 23a and the bearing bracket 23b. Therefore, the grease reservoir 50 can be formed easily, without requiring any complicated working.

Moreover, with the grease held in the grease reservoir 50, the rod 85 moves smoothly. Moreover, since the rod wiper 33e also holds the grease on the side of the first rod seal member 33, the rod 85 moves more smoothly.

Moreover, both the first rod seal member 33 and the second rod seal member 35 are provided on the side of the front bracket 23a. Therefore, by simply detaching the front bracket 23a only, the first rod seal member 33 and the second rod seal member 35 can be replaced easily.

Moreover, in the stage of axial center adjustment, the front bracket 23a, the first rod seal member 33, the rod wiper 33e and the second rod seal member 35 are not attached. Therefore, these parts do not give any frictional resistance effect to the rod 85 during its movement in the axis direction, and the axial center of the rod 85 can be adjusted easily.

Moreover, DLC coating is applied to the first rod seal member 33 and the second rod seal member 35 as the surface hardening treatment, and hard chrome plating is applied to the outer peripheral surface of the rod 85 as the surface hardening treatment. Accordingly, the coefficient of friction between, the first rod seal member 33 as well as the second rod seal member 35, and the rod 85, is reduced, whereby the smooth movement of the actuator 1 can be accomplished. Further, the abrasion resistance of the first rod seal member 33, the second rod seal member 35 and the rod 85 can be improved.

Moreover, the base 65 integrates the bearing housing 67, the motor bracket 69, the motor 73, the ball screw 78, the ball nut 79, the rod 85, etc., whereby the actuator body 10 is constituted. Therefore, with the incorporation of the actuator body 10 in the housing 3, and with the detachment of the actuator body 10 from the housing 3, the assembly and dismantlement of the actuator can be performed easily.

Moreover, the motor bracket 69 and the bearing housing 67 are fixed to each other by the set screw 71. Therefore, by simply removing the set screw 71 only, the integral part composed of the motor bracket 69, the motor 73 and the encoder 75 can be separated from the actuator body 10. Moreover, by removing the rear cover 9 of the housing 3, the integral part composed of the motor bracket 69, the motor 73 and the encoder 75 can be detached out of the housing 3, whereby repair and replacement of the motor 73 or the encoder 75, etc., can be performed easily.

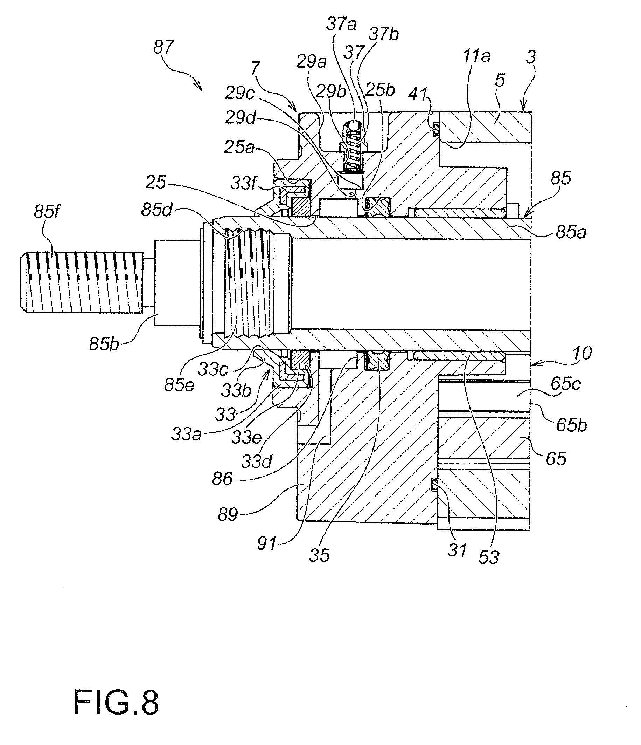

Next, a second embodiment of the present invention will be explained with reference to Fig. 8.

First, the structure of an actuator 87 according to the second embodiment will be explained.

Although the structure of the actuator 87 according to the second embodiment is substantially the same as that of the actuator 1 according to the first embodiment as described above, a front cover 89 is not composed of two members, such as the front bracket 23a and the bearing bracket 23b of the front cover 7 according to the first embodiment as described above, but is composed of a single member. Therefore, the grease reservoir 50, which exists in the front cover 7 according to the first embodiment as described above, is not formed.

Moreover, since the front cover 89 is composed of the single member, there is no O-ring 51, which is provided between the front bracket 23a and the bearing bracket 23b according to the first embodiment as described above.

Moreover, in the second embodiment, the rod through-hole 25 is a through-hole penetrating through the whole part of the front cover 89, and the bearing 53 is provided on the rear end side (the right end side of Fig. 8) thereof.

Note that, since the other structure is substantially the same as that of the actuator 1 according to the first embodiment as described above, the same reference numerals are allotted to the same parts as those of the first embodiment, and the explanation thereof will be omitted.

Next, functions of the actuator 87 according to the second embodiment will be explained.

The actuator 87 according to the second embodiment also exercises substantially the same functions as those of the actuator 1 according to the first embodiment.

However, since the actuator 87 does not include the grease reservoir in the front cover 89, the holding of grease in the grease reservoir, or the feeding of grease from the grease reservoir, is not performed.

Note that, it is possible to provide a grease reservoir by drilling, etc.

Next, effects of the actuator 87 according to the second embodiment will be explained.

The actuator 87 according to the second embodiment can also exercise substantially the same effects as those of the actuator 1 according to the first embodiment.

In addition, since the front cover 89 is composed of the single member, the number of parts can be reduced, whereby the parts management can be facilitated, and the production cost can be reduced. Moreover, the structure can be simplified.

Note that, the present invention is not limited to the first and second embodiment as described above.

First, according to the first and second embodiments as described above, the two rod seal members, namely the first rod seal member 33 and the second rod seal member 35 are provided as the rod seal members. However, it is also possible to provided three or more rod seal members.

Moreover, in the structure of the first and second embodiments as described above, the guided part 83 is slidably guided by rolling relative to the guide rails 65b, 65b. However, it is also possible to provide a linear guide or the like.

Moreover, in the first and second embodiments, the pressure change absorption groove 86 is the circular-shaped groove. However, it is also possible to form the grooves intermittently in the circumferential direction.

However, among the plurality of grooves provided intermittently, at least one groove must be communicated with grease feeding path (orifice) 29d.

Moreover, it is also possible to provide the plurality of pressure change absorption grooves 86 in the axis direction.

Moreover, the shape and size of the pressure change absorption groove 86 are not limited specifically.

Moreover, various types of surface hardening treatment can be applied to the rod body 85a, the first rod seal member 33 and the second rod seal member 35.

Moreover, in the first and second embodiments, DLC coating is applied to both the first rod seal member 33 and the second rod seal member 35 as the surface hardening treatment. However, it is also possible to apply DLC coating to only either one of the first rod seal member 33 or the second rod seal member 35 as the surface hardening treatment.

Moreover, it is also possible to apply the surface hardening treatment only to the side of the rod body 85a, and it is further possible to apply the surface hardening treatment only to the side of the first rod seal member 33 or only to the side of the second rod seal member 35. Further, the present invention is not limited to the structure as illustrated in the drawings, and various modifications can be provided.

### INDUSTRIAL APPLICABILITY

The present invention relates to an actuator used for an industrial robot, for example, and more specifically, relates to the actuator which, by providing a pressure change absorption groove which absorbs pressure change associated with forward/rearward movement of a rod, can prevent leaking of lubricant out of a housing during forward/rearward movement of the rod. For example, the present invention is suitable for an actuator used for a food manufacturing robot.

### EXPLANATION OF REFERENCE NUMERALS AND SIGNS

- 1: Actuator
- 3: Housing
- 5: Housing body
- 7: Front cover
- 9: Rear cover
- 10: Actuator body
- 11a: Front opening
- 11b: Rear opening
- 23a: Front bracket
- 23b: Bearing bracket
- 29d: Grease feeding path (orifice)
- 33: First rod seal member
- 33e: Rod wiper
- 35: Second rod seal member
- 41: Front cover seal member
- 50: Grease reservoir
- 62: Rear cover seal member
- 73: Motor
- 78: Ball screw
- 65f: Housing seal member
- 79: Ball nut
- 85: Rod
- 86: Pressure change absorption groove
- 87: Actuator
- 89: Front cover

## Claims

1. An actuator comprising:
a housing provided with a rod through-hole;
a rod penetrating through the rod through-hole and projecting partially towards outside the housing and driven in the forward/rearward direction;
a first rod seal member provided in the rod through-hole on the side closer to the outside of the housing;
a second rod seal member provided in the rod through-hole on the side closer to the inside of the housing;
a lubricant feeding part provided in the housing and which feeds lubricant to the rod through-hole; and
a pressure change absorption groove, provided between the first rod seal member and the second rod seal member of the rod through-hole in a state of being communicated with the lubricant feeding part, in which an air layer is formed, and which absorbs pressure change associated with forward/rearward movement of the rod.

2. The actuator as claimed in claim 1, wherein,
the lubricant feeding part is provided with an orifice, and
the pressure change absorption groove is communicated with the orifice.

3. The actuator as claimed in claim 2, wherein,
the pressure change absorption groove is provided in a circular shape.

4. The actuator as claimed in any claim of claims 1 to 3, wherein,
a rod wiper, through which the rod penetrates and which holds the lubricant, is provided on the side closer to the outside of the housing than the pressure change absorption groove.

5. The actuator as claimed in any claim of claims 1 to 4, wherein,
the housing is composed of a housing body provided with a front opening and a rear opening at both ends, a front cover which closes the front opening, and a rear cover which closes the rear opening;
a front cover seal member is interposed between the front cover and the housing body; and
a rear cover seal member is interposed between the rear cover and the housing body.

6. The actuator as claimed in claim 5, wherein,
an actuator body is incorporated inside the housing body; and
the actuator body is composed of a motor, a screw rotated by the motor, a nut screwed into the screw, and the rod fixed to the nut.

7. The actuator as claimed in claim 5 or claim 6, wherein,
the front cover is composed of a front bracket, and a bearing bracket disposed on the inner side of the front bracket in the axis direction; and
a grease reservoir is provided between the front bracket and the bearing bracket.

8. The actuator as claimed in claim 7, wherein,
the first rod seal member and the second rod seal member are provided on the side of the front bracket.

9. The actuator as claimed in any claim of claims 1 to 8, wherein,
surface hardening treatment is applied to the outer surface of the rod.

10. The actuator as claimed in claim 9, wherein,
the surface hardening treatment applied to the rod is hard chrome plating.

11. The actuator as claimed in any claim of claims 1 to 8, wherein,
surface hardening treatment is applied at least to the inner surfaces of the first rod seal member and the second rod seal member.

12. The actuator as claimed in claim 11, wherein,
the surface hardening treatment applied to the first rod seal member and the second rod seal member is DLC (diamond-like carbon) coating.

13. The actuator as claimed in any claim of claims 6 to 12, wherein,
the actuator body is fixed to the housing by screwing screw members from the outside of the housing, and penetrating parts of the screw members through the housing are provided with housing seal members.
